# EUROPEAN PATENT SPECIFICATION

(11) **EP 1 982 904 B1**
(45) Date of publication and mention of the grant of the patent: **16.02.2011**
(21) Application number: 08154752.3
(22) Date of filing: 17.04.2008
(51) Int. Cl.: B62D 55/125, B62D 55/092

(54) **Track assembly for moving a ground work vehicle**
Raupenkettenanordnung zum Bewegen eines Bodenarbeitsfahrzeuges
Ensemble de chenilles pour déplacer un véhicule de travail terrestre

(30) Priority: 20.04.2007 IT MN20070016
(43) Date of publication of application: 22.10.2008
(73) Proprietor: Tidue S.R.L., 25010 Remedello (BS) (IT)
(72) Inventor: Canossa, Riccardo, 46036 Revere (MN) (IT)
(74) Representative: Modiano, Micaela Nadia

(56) References cited:
- WO-A-02/10007
- US-A- 4 988 329
- US-A- 5 829 848
- US-A- 6 047 785
- US-A1- 2005 061 557
- US-A1- 2007 017 714
- US-B1- 6 176 334

## Description

The present invention relates to a track assembly for moving a ground work vehicle.

It is known that different types of ground work vehicles, and for example of vehicles working in the agricultural field or of earth-carrying vehicles or vehicles for geophysical research, have, instead of the wheels of at least one axle, track assemblies which comprise a structure for supporting a drive sprocket which moves a track which is in contact with guiding wheels and contact rollers associated with such structure.

The drive sprocket of each track assembly is connected to a corresponding drive shaft at a flange which is rigidly coupled to such shaft, and such flange can provide for the presence of a speed reduction unit which is arranged so as to protrude with respect to the flange, i.e., protrude toward the outside of the work vehicle.

In the background art, the drive sprocket of the track assembly is fixed to the flange of the drive shaft by means of a single center bearing or with the interposition of elements, such as for example spacers, which however cause space occupation problems and also cause intense stresses to the track assembly, with consequent problems as to strength and durability.

US-A-5 829 848 discloses a track assembly for moving a ground work vehicle having a combination of elements as set forth in the pre-characterising portion of claim 1.

The aim of the present invention is to provide a track assembly which ensures maximum bulk reduction, a critical condition in the case of machines designed to circulate on roads as well, and has optimum characteristics in terms of strength and durability even at relatively high hub rotation rates.

In accordance with the invention, there is provided a track assembly for moving a ground work vehicle, as defined in the appended claims.

Further characteristics and advantages of the present invention will become better apparent from the description of a preferred but not exclusive embodiment thereof, illustrated by way of non-limiting example in the accompanying drawings, wherein:

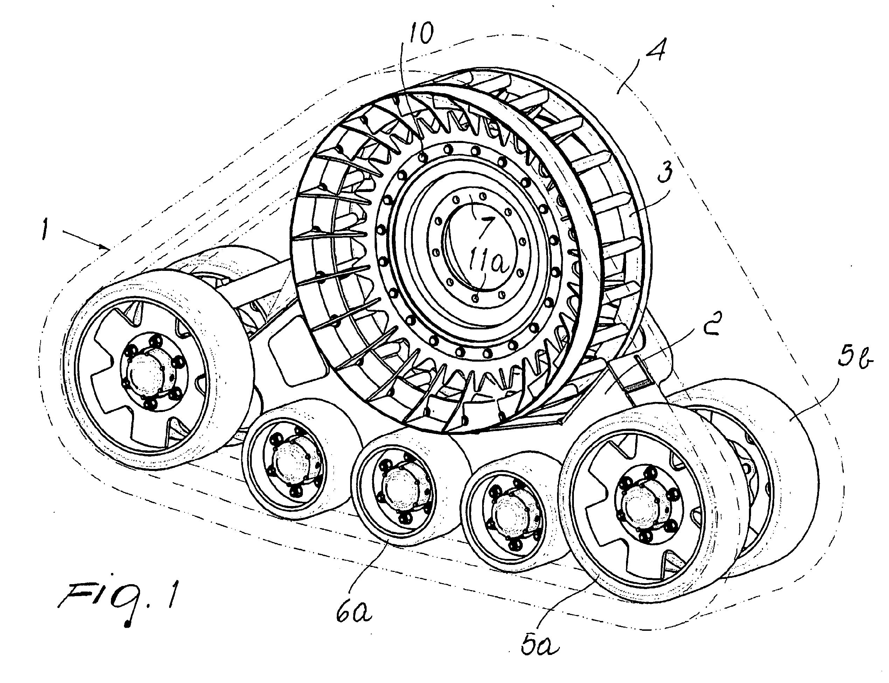

Figure 1 is a perspective view of the track assembly according to the invention, taken from the side directed toward the work vehicle;

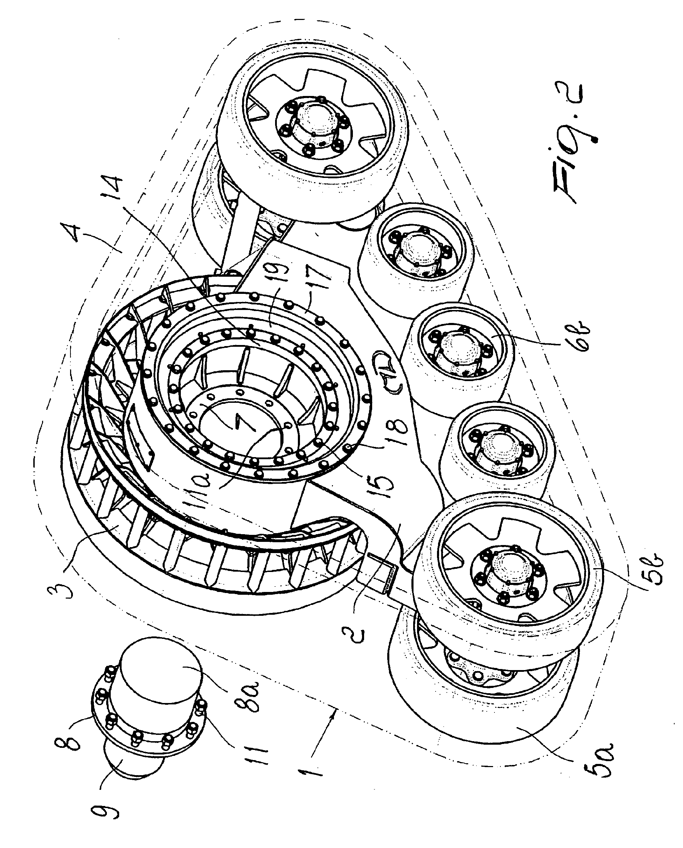

Figure 2 is a perspective view of the track assembly according to the invention, taken from the side that is directed outwardly;

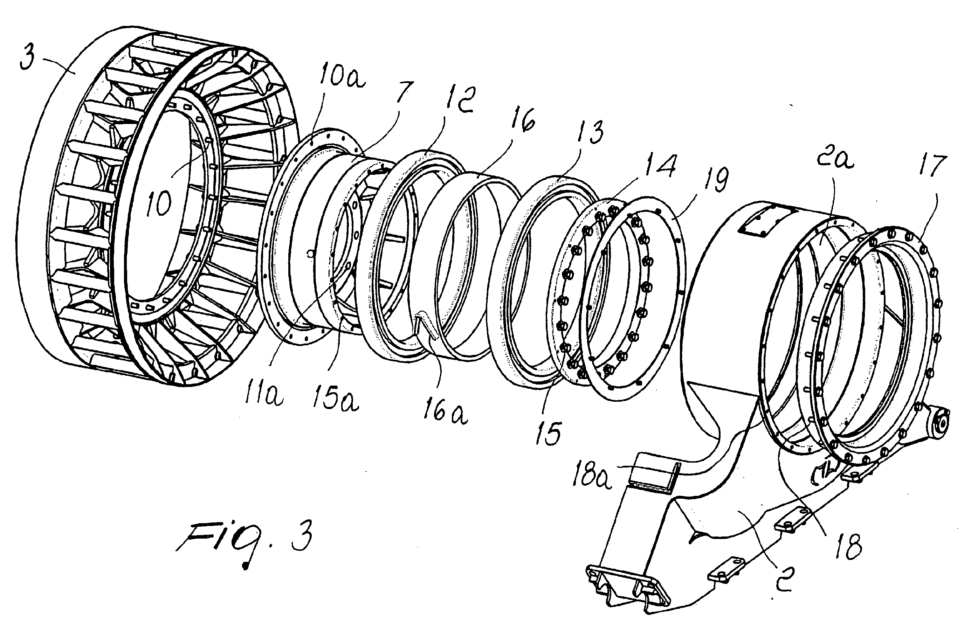

Figure 3 is an exploded view of the track assembly of the invention.

With reference to the figures, the reference numeral 1 generally designates a track assembly according to the invention, which comprises a supporting structure 2 of a drive sprocket 3 which moves a track 4 in contact with two pairs of guiding wheels 5a, 5b and with contact rollers 6a, 6b, all of which are supported by the structure 2.

The drive sprocket 3 comprises a hub 7, which is adapted to be connected directly, i.e., without the interposition of any element, to a flange 8 which is rigidly coupled to a drive shaft 9 designed to transmit motion to the drive sprocket 3.

More particularly, it is noted that the drive sprocket 3 is fixed to the hub 7 by means of screws 10, inserted in holes 10a, and that the hub 7 is fixed directly to the flange 8 by means of screws 11 inserted in holes 11a.

The flange 8 has a speed reduction unit 8a which protrudes therefrom and thus the hub 7 is shaped so as to contain internally the reduction unit.

The hub 7 supports the inner rings of at least two rolling bearings 12 and 13, which are conveniently locked by means of a ring 14, which is fixed to the hub 7 by means of screws 15 inserted in holes 15a, and between the bearings there is a spacer 16, which is provided with a protrusion 16a shaped like a blade which is adapted to stir the lubricating grease.

The outer rings of the two bearings 12 and 13 are associated with a seat 2a formed within the support 2, conveniently locked with the aid of suitable abutments by means of a ring 17, which is fixed to the support 2 by means of screws 18 inserted in holes 18a.

Finally, the reference numeral 19 designates a protective ring.

The described invention is susceptible of numerous modifications and variations, all of which are within the scope of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A track assembly (1) for moving a ground work vehicle, comprising a structure (2) which supports a drive sprocket (3) of a track (4) which is designed to be associated with a drive shaft (9) at a flange (8) which is rigidly coupled to said shaft and has a protruding speed reduction unit (8a), and further supports guiding wheels (5a, 5b) and track contact rollers (6a, 6b),the drive sprocket (3) having a hub (7) shaped so as to support, so that they are conveniently locked, inner rings of at least two rolling bearings (12, 13), the outer rings of said bearings (12, 13) being associated, so as to be conveniently locked, with a seat (2a) formed within said support structure (2), **characterized in that** said hub (7) is shaped so as to contain said reduction unit (8a) internally, and **in that** a spacer (16) provided with a protrusion (16a) shaped like a blade, which is adapted for stirring the lubricating grease, is interposed between said bearings.

## Patentansprüche

1. Eine Raupenkettenanordnung (1) zum Bewegen eines Bodenarbeitsfahrzeugs, die eine Struktur (2) umfasst, welche ein Antriebskettenrad (3) einer Raupenkette (4) trägt, das dazu ausgebildet ist, mit einer Antriebswelle (9) an einem Flansch (8) verbunden zu werden, der starr mit der Welle gekoppelt ist und der eine vorstehende Geschwindigkeits-Reduktionseinheit (8a) hat, und weiter Führungsräder (5a, 5b) und Raupenketten-Kontaktrollen (6a, 6b) trägt, wobei das Antriebskettenrad (3) eine Nabe (7) hat, die geformt ist, um innere Ringe von mindestens zwei Wälzlagern (12, 13) so zu tragen, dass sie passend verriegelt sind, wobei die äußeren Ringe der Lager (12, 13) mit einem Sitz (2a), der in der Stützstruktur (2) geformt ist, so verknüpft sind, dass sie passend verriegelt sind; **dadurch gekennzeichnet, dass** die Nabe (7) so geformt ist, dass sie in ihrem Inneren die Reduktionseinheit (8a) enthält; und **dadurch**, dass ein Abstandshalter (16), der mit einem Vorsprung (16a) ausgestattet ist, der wie eine Klinge geformt ist, welcher zum Rühren des Schmierfetts ausgebildet ist, zwischen den Lagern angeordnet ist.

## Revendications

1. Ensemble de chenille (1) pour déplacer un véhicule de terrassement, comprenant une structure (2) qui supporte un pignon de commande (3) d'une chenille (4) qui est conçu pour être associé à un arbre d'entraînement (9) sur une bride (8) qui est couplée de manière rigide audit arbre, et a une unité de réduction de vitesse en saillie (8a), et supporte en outre des roues de guidage (5a, 5b) et des rouleaux de contact de chenille (6a, 6b), le pignon de commande (3) ayant un moyeu (7) formé afin de supporter, de sorte qu'ils sont convenablement bloqués, des bagues internes d'au moins deux paliers de roulement (12, 13), les bagues externes desdits paliers (12, 13) étant associées, afin d'être convenablement bloquées, avec un siège (2a) formé à l'intérieur de ladite structure de support (2), **caractérisé en ce que** ledit moyeu (7) est formé afin de contenir ladite unité de réduction (8a) intérieurement, et **en ce qu'**un dispositif d'espacement (16) prévu avec une saillie (16a) formée comme une pale, qui est adaptée pour agiter la graisse de lubrification, est intercalé entre lesdites paliers.
